# EUROPEAN PATENT SPECIFICATION

(11) **EP 0 810 500 B1**
(45) Date of publication and mention of the grant of the patent: **19.12.2001**
(21) Application number: 97108352.2
(22) Date of filing: 23.05.1997
(51) Int. Cl.: G05D 3/12, G05D 3/18

(54) **A control circuit for a proportional solenoid valve, particularly for use on board motor vehicles**
Steuerungsschaltung für proportionales Steuerventil, insbesondere zum Gebrauch bei Kraftfahrzeugen
Circuit de commande pour une vanne proportionnelle à solénoide, en particulier utilisée à bord de véhicules à moteurs

(30) Priority: 27.05.1996 IT TO960457
(43) Date of publication of application: 03.12.1997
(73) Proprietor: MAGNETI MARELLI POWERTRAIN S.p.A., 10138 Torino (IT)
(72) Inventor: Marino, Pasquale, 10095 Grugliasco, (Torino) (IT); Alotto, Giorgio, 10055 Condove, (Torino) (IT); Vaulato, Alberto, 10045 Piossasco, (Torino) (IT); Ferrara, Riccardo, 10073 Cirie, (Torino) (IT)
(74) Representative: Quinterno, Giuseppe

(56) References cited:
- DE-A- 3 905 937
- US-A- 4 625 622
- US-A- 4 628 499
- US-A- 4 737 882
- US-A- 4 763 052
- US-A- 5 079 498

## Description

The present invention relates to a control circuit for a proportional solenoid valve of the kind defined in the preamble of claim 1.

A control circuit of this kind is known from US-A-5 079 498.

For proportional solenoid valves the positioning precision of the movable actuation member depends not only on the initial calibration of the control circuit but also on the accuracy with which the excitation current is controlled.

Proportional solenoid valves can be used on board motor vehicles, for example in hydraulic systems for actuating gear boxes.

The object of the present invention is to provide an improved control circuit for a proportional solenoid valve, of the afore-mentioned type, which will have a relatively limited cost and which is particularly suitable for operation with a single non-stabilised voltage supply source as in the case of the battery on board a motor vehicle.

This and other objects are achieved according to the invention with a control circuit the principle characteristics of which are defined in the attached Claim 1.

Other characteristics and constructional variations are defined in the subsidiary claims.

Further characteristics and advantages of the invention will become apparent from the following detailed description, given purely by way of example, with reference to the attached drawings, in which:
Figure 1 is a partial block diagram which shows an embodiment of a control circuit for a proportional solenoid valve according to the invention; and
Figure 2 is a series of three diagrams which show, as a function of time plotted along the abscissa, an example of the variation of signals generated in operation of the control circuit of Figure 1.

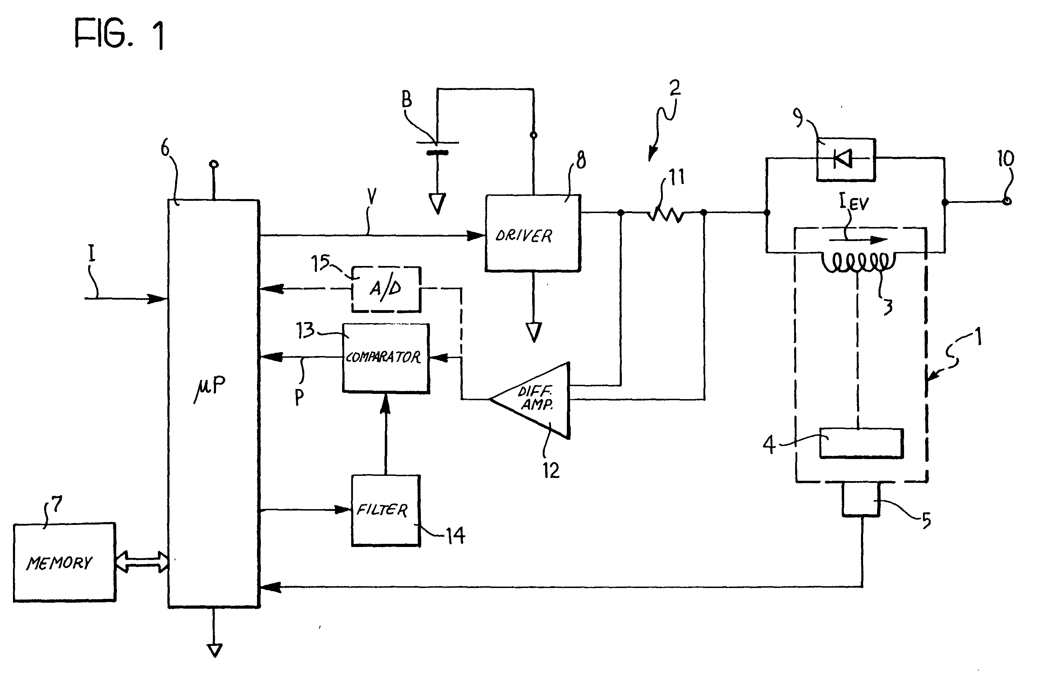

In Figure 1 a solenoid valve of proportional type is generally indicated 1, and the reference numeral 2 indicates an associated control circuit for this solenoid valve.

The solenoid valve 1 comprises a control winding or solenoid 3 and a movable member 4 the position of which is controllable by means of the strength of the current supplied to the winding 3. A position sensor 5 can conveniently be associated with the movable member 4.

The control circuit 2 in the exemplary embodiment illustrated comprises a microprocessor control unit 6 with associated memory device 7. This unit has an output connected to a control input of a pilot circuit which is connected to the control winding 3 of the solenoid valve 1. The pilot circuit 8, which may simply comprise a transistor controlled in on-off manner, is connected to a DC voltage supply source B such as the battery on board a motor vehicle.

In parallel with the control winding 3 of the solenoid valve 1 is connected a current recirculation device 9 such as, for example, a diode. The unit constituted by the control winding 3 and associated recirculation device 9 is connected at one side to a terminal 10 maintained, in operation, at a reference potential, and at the other side is connected to a current sensor resistor 11.

The pilot circuit 8 is so arranged that, when it receives an activation signal at its input, it couples the control winding 3 of the solenoid valve to the voltage source B, in such a way as to cause current to flow in this winding. Substantially the same current flows in the resistor 11 as flows in the control winding 3 of the solenoid valve so that the voltage drop across this resistor is indicative of the said current.

The resistor terminals 11 are connected to corresponding inputs of a differential amplifier 12 the output of which is connected to a first input of a comparator 13. This comparator has a second input which is connected to the output of a filter 14. This filter receives an input signal at fixed frequency and modulated pulse width, that is to say a signal of the so-called PWM type, emitted by a corresponding output channel of the microprocessor 6. This signal is generated in such a way that its average value corresponds to the desired current in the control winding 3 of the solenoid valve 1. The filter 14 is conveniently a second order low pass filter.

The output of the comparator 13 is connected to one input of the microprocessor 6.

The microprocessor 6 further has an input I for a signal indicative of the desired magnitude of the actuation of the solenoid valve 1. On the basis of the signal provided to the input I the microprocessor 6 processes the PWM signal which is present at the input of the filter 14. Correspondingly, the threshold voltage applied to the second input of the comparator circuit 13 varies.

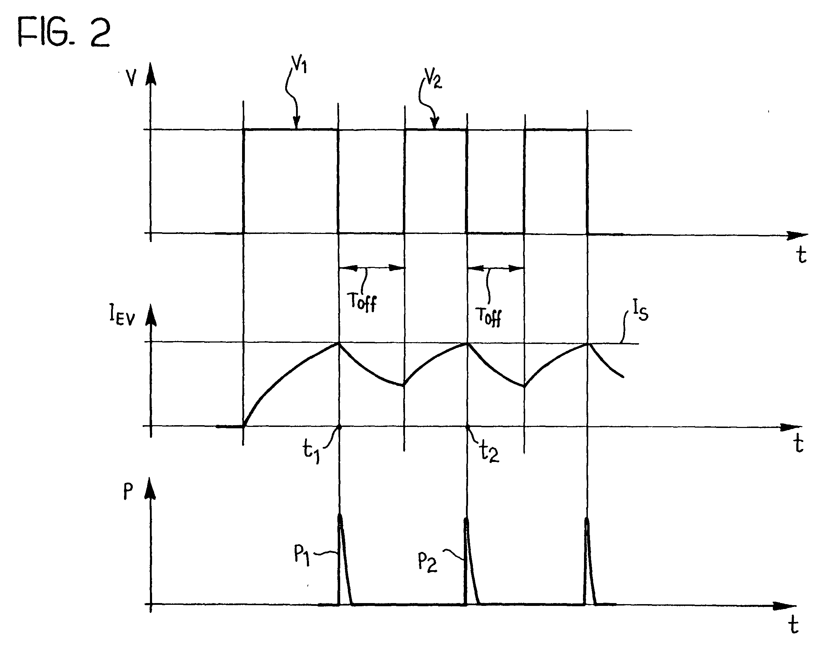

The microprocessor 6 is set up to cause activation of the solenoid valve 1 by providing the pilot circuit 8 with control signals of on-off type. In particular the microprocessor 6 is set up to apply successive activation and disactivation signals to the input of the pilot circuit 8 in a manner which will now be described in detail with reference to Figure 2.

In Figure 2 are shown examples of the variations of the signal V applied by the microprocessor 6 to the input of the pilot circuit 8, the corresponding variation of the strength of the current I_{EV} in the winding 3 of the solenoid valve, and the signal P provided to the microprocessor 6 by the output of the comparator 13.

To control the solenoid valve 1 the microprocessor 6 initially applies to the input of the pilot circuit 8 an activation signal indicated V₁ in Figure 2. The pilot circuit couples the winding 3 of the solenoid valve to the voltage source B and correspondingly a current I_{EV} flows in this winding, which increases as is shown in Figure 2 until the current reaches the threshold level I_{S} associated with the comparator 13. When this occurs, at the instant indicated t₁ in Figure 2, the comparator 13 provides a pulse (interrupt signal) P₁ to the microprocessor 6, which consequently disactivates the pilot circuit 8 for a predetermined time period T_{OFF}. During the disactivation time period T_{OFF} the current in the winding 3 falls, substantially as is shown in Figure 2.

At the end of the disactivation time period T_{OFF} the microprocessor 6 provides a further activation signal V₂ to the pilot circuit 8. Correspondingly, the current I_{EV} in the winding 3 of the solenoid valve starts to rise again until again reaching the threshold value I_{S} at the instant indicated t₂ in Figure 2. The comparator 13 provides a second interrupt pulse P₂ to the microprocessor, which again disactivates the pilot circuit 8 for a time period T_{OFF}.

The operation continues substantially as described above, with successive activation and disactivation periods of the pilot circuit 8.

The disactivation time period T_{OFF} of the pilot circuit 8 can be fixed and constant or it can be made dynamically variable, in operation, with variation, for example, of the voltage delivered by the source B (battery) or of the current I_{EV} of the solenoid valve in such a way as to minimise and maintain constant the ripple in the current in the solenoid valve and to reduce the control errors thereof.

For a control of the time T_{OFF} in dependence on the current I_{EV} the output of the differential amplifier 12 can be connected to a suitable input of the microprocessor 6, for example through an analogue/digital converter such as that illustrated in broken outline and indicated 15 in Figure 1. Similarly, for control of the time T_{OFF} as a function of the voltage delivered by the source B, this delivered voltage can be detected with sensor devices known per se and supplied to the microprocessor 6 via an analogue/digital converter.

Conveniently, the microprocessor 6 is set up to detect the switching frequency of the signal V, or rather the frequency of the interrupt signals P which are provided to it by the comparator 13. This can be achieved, for example, by detecting the elapsed time for the reception of a predetermined number y of interrupt pulses provided by the comparator 13. The microprocessor 6 is now conveniently set up to check if the time needed to receive y interrupt signals is less than a predetermined value z. This means that the frequency of activation/disactivation of the pilot circuit 8 has exceeded a predetermined value.

The detection of such a condition allows the microprocessor to diagnose a short circuit condition of the winding 3 of the solenoid valve to a terminal of the supply voltage source. In fact, in the case of such short circuit, the current delivered by the pilot circuit 8 is high and reaches the threshold I_{S} in an extremely rapid manner so that the switching of the pilot circuit 8 assume a very high frequency.

The signalling of a likely short circuit condition can be possibly conditioned to the checking, by the microprocessor 6, that the current detected via the resistor 11 is greater than a predetermined value.

If a likely short circuit condition is detected the microprocessor 6 is conveniently arranged to maintain the pilot circuit 8 disactivated further.

The microprocessor 6 can moreover be set up to detect and indicate a likely open circuit condition such as a disconnection or an interruption of the solenoid valve winding.

To diagnose a likely operating condition with the load in open circuit the microprocessor 6 is arranged to compare the frequency of the interrupt pulses provided to it by the comparator 13 with a predetermined minimum frequency value. This can be achieved also in this case by detecting the time necessary for the achievement of a number y of interrupt pulses and by comparing this time with a predetermined value w.

When a likely condition of operation with the load in open circuit is diagnosed the microprocessor 6, as well as generating a corresponding alarm signal, acts to maintain the pilot circuit 8 disactivated.

The microprocessor 6 is moreover conveniently arranged to acquire the value of the voltage delivered by the source B and to control the pilot circuit 8 directly with a PWM signal of fixed frequency (for example at 1KHz) and with a variable duty cycle depending on a predetermined function of the position of the movable member 4 of the solenoid valve, indicated by the sensor 5.

Conveniently, during the testing of the control circuit associated with a given solenoid valve, a calibration is performed during the course of which the optimum values of the variable parameters of the control circuit are stored in the memory devices 7 associated with the microprocessor. In these memory devices, which conveniently are of non-volatile type, there is also stored the overall gain of the control circuit to compensate tolerances in the components and the offset of the amplifiers used.

## Claims

1. A control circuit (2) for a solenoid valve (1) of proportional type having a control solenoid or winding (3); comprising
- a pilot circuit (8) operable, when it receives an activation signal (V), to couple the said winding (3) to a DC voltage source (B) to cause a current to flow in this winding (3);
- sensor means (11, 12) for sensing the current (I_{EV}) flowing in the said winding (3);
- comparison circuit means (13) connected to the said sensor means (11, 12) to compare the current (I_{EV}) flowing in the said winding (3) with a threshold value (I_{S}), and
- control circuit means (6) connected to the said pilot circuit (8) and to comparison means (13) arid arranged to cause activation of the solenoid valve (1) by providing the said pilot circuit (8) with successive activation and disactivation signals, the activation signals (V₁, V₂) being provided as long as the current (I_{EV}) detected by the said sensor means (11) is less than the said threshold value (I_{S}), the disactivation signals having a predetermined duration (T_{OFF});
**characterised in that** the said control circuit means (6) are arranged to detect the frequency of the activation signals applied to the pilot circuit (8) and to generate a first signal when the said frequency is greater than a first predetermined value a second signal when the said frequency is less than a second predetermined value.

2. A control circuit according to Claim 1, **characterised in that** the said disactivation signals have a fixed constant duration (T_{OFF}).

3. A control circuit according to Claim 1, **characterised in that** the said disactivation signals have a variable duration (T_{OFF}).

4. A control circuit according to Claim 3, **characterised in that** the said control circuit means (6) are arranged to vary the duration (T_{OFF}) of the said disactivation signals as a function of the current (I_{EV}) detected by the said sensor means (11).

5. A control circuit according to Claim 3, **characterised in that** the said control circuit means (6) are arranged to vary the duration (T_{OFF}) of the said disactivation signals as a function of the voltage delivered by the said source (B).

6. A control circuit according to Claim 1, **characterised in that** the said control circuit means (6) are connected to the current sensor means (11) and are arranged to generate a first alarm signal when the frequency of the activation signal is greater than the said first predetermined value and the current detected by the said sensor means (11) is greater than a predetermined value.

7. A control circuit according to Claim 1, **characterised in that** the said control circuit means (6) are arranged to generate a second alarm signal when the frequency of the activation signals is less than the said second predetermined value and the current detected by the said sensor means (11) is less than a predetermined value.

8. A control circuit according to any preceding claim, **characterised in that** the said control circuit means (6) are arranged to provide the pilot circuit (8) with activation and disactivation signals at a fixed frequency and a modulated pulse width (PWM) when the voltage delivered by the said source (B) is less than a predetermined value.

9. A control circuit according to any preceding claim, **characterised in that** the said control circuit means (6) comprise a microprocessor.

10. A control circuit according to Claim 9, **characterised in that** the said current sensor means comprise a resistor (11) substantially in series with the said winding (3), and a differential amplifier (12) connected to the terminals of the said resistor (11).

11. A control circuit according to Claim 10, **characterised in that** the said comparison circuit means include a threshold comparator (13) with a first input connected to the output of the differential amplifier (12) and a second input connected to the output of a threshold signal generator circuit (14).

12. A control circuit according to Claim 11, **characterised in that** the microprocessor (6) has an output channel for a signal (PWM) the average value of which is indicative of the desired current in the winding (3) of the solenoid valve (1), and **in that** the said output channel is coupled to the said second input of the comparator circuit (13) by a low pass filter (14).

## Patentansprüche

1. Ansteuerstufe (2) für ein Proportional-Magnetventil (1), das eine Steuerwicklung oder Zylinderspule (3) besitzt;
wobei die Ansteuerstufe enthält:
- eine Steuerstufe (8), die aktiviert werden kann, wenn sie ein Aktivierungssignal (V) empfängt, um die Wicklung (3) mit einer Gleichspannungsquelle (B) zu verbinden, um in dieser Wicklung (3) einen Strom fließen zu lassen;
- einen Fühler (11, 12), um den Strom (I_{EV}) abzutasten, der durch die Wicklung (3) fließt;
- einen Vergleicher (13), der mit dem Fühler (11, 12) verbunden ist, um den durch die Wicklung (3) fließenden Strom (I_{EV}) mit einem Schwellenwert (I_{S}) zu vergleichen; und
- einen Steuerschaltkreis (6), der mit der Steuerstufe (8) und dem Vergleicher (13) verbunden und so angeordnet ist, um das Magnetventil (1) dadurch zu aktivieren, dass die Steuerstufe (8) mit aufeinanderfolgenden Aktivierungs- und Deaktivierungssignalen angesteuert wird, wobei die Aktivierungssignale (V₁, V₂) solange geliefert werden, solange der vom Fühler (11) abgetastete Strom (I_{EV}) niedriger als der Schwellenwert (I_{S}) ist, wobei die Deaktivierungssignale eine vorgegebene Dauer (T_{OFF}) besitzen;
**dadurch gekennzeichnet, dass** der Steuerschaltkreis (6) so angeordnet ist, dass er die Frequenz der Aktivierungssignale abtastet, die an der Steuerstufe (8) liegen, und ein erstes Signal erzeugt, wenn die Frequenz höher als ein erster vorgegebener Wert ist, und ein zweites Signal erzeugt, wenn die Frequenz niedriger als ein zweiter vorgegebener Wert ist.

2. Ansteuerstufe gemäß Anspruch 1, **dadurch gekennzeichnet, dass** die Deaktivierungssignale eine feste, konstante Dauer (T_{OFF}) besitzen.

3. Ansteuerstufe gemäß Anspruch 1, **dadurch gekennzeichnet, dass** die Deaktivierungssignale eine veränderbare Dauer (T_{OFF}) besitzen.

4. Ansteuerstufe gemäß Anspruch 3, **dadurch gekennzeichnet, dass** der Steuerschaltkreis (6) so angeordnet ist, dass er die Dauer (T_{OFF}) der Deaktivierungssignale als Funktion des Stroms (I_{EV}) verändert, der vom Fühler (11) abgetastet wird.

5. Ansteuerstufe gemäß Anspruch 3, **dadurch gekennzeichnet, dass** der Steuerschaltkreis (6) so angeordnet ist, dass er die Dauer (T_{OFF}) der Deaktivierungssignale als Funktion der Spannung ändert, die von der Quelle (B) geliefert wird.

6. Ansteuerstufe gemäß Anspruch 1, **dadurch gekennzeichnet, dass** der Steuerschaltkreis (6) mit dem Stromfühler (11) verbunden und so angeordnet ist, um dann ein erstes Alarmsignal zu erzeugen, wenn die Frequenz des Aktivierungssignals höher als der erste vorgegebene Wert ist, und wenn der vom Fühler (11) abgetastete Strom höher als ein vorgegebener Wert ist.

7. Ansteuerstufe gemäß Anspruch 1, **dadurch gekennzeichnet, dass** der Steuerschaltkreis (6) so angeordnet ist, um dann ein zweites Alarmsignal zu erzeugen, wenn die Frequenz der Aktivierungssignale niedriger als der zweite vorgegebene Wert ist, und wenn der vom Fühler (11) abgetastete Strom niedriger als ein vorgegebener Wert ist.

8. Ansteuerstufe gemäß irgendeinem der bisherigen Ansprüche, **dadurch gekennzeichnet, dass** der Steuerschaltkreis (6) so angeordnet ist, um die Steuerstufe (8) mit Aktivierungs- und Deaktivierungssignalen mit einer festen Frequenz und einer modulierten Impulsbreite (PWM) anzusteuern, wenn die von der Quelle (B) gelieferte Spannung niedriger als ein vorgegebener Wert ist.

9. Ansteuerstufe gemäß irgendeinem der bisherigen Ansprüche, **dadurch gekennzeichnet, dass** der Steuerschaltkreis (6) einen Mikroprozessor enthält.

10. Ansteuerstufe gemäß Anspruch 9, **dadurch gekennzeichnet, dass** der Stromfühler einen Widerstand (11), der im Wesentlichen mit der Wicklung (3) in Serie liegt, sowie einen Differentialverstärker (12) enthält, der mit den Anschlüssen dieses Widerstands (11) verbunden ist.

11. Ansteuerstufe gemäß Anspruch 10, **dadurch gekennzeichnet, dass** der Vergleicher einen SchwellenwertVergleicher (13) mit einem ersten Eingang, der mit dem Ausgang des Differentialverstärkers (12) verbunden ist, sowie mit einem zweiten Eingang enthält, der mit dem Ausgang eines Schwellenwertsignal-Generators (14) verbunden ist.

12. Ansteuerstufe gemäß Anspruch 11,, **dadurch gekennzeichnet, dass** der Mikroprozessor (6) einen Ausgangskanal für ein Signal (PWM) besitzt, dessen Mittelwert den gewünschten Strom in der Wicklung (3) des Magnetventils (1) anzeigt, und dass der Ausgangskanal mit dem zweiten Eingang des Vergleichers (13) über ein Tiefpassfilter (14) verbunden ist.

## Revendications

1. Circuit de commande (2) pour une vanne à solénoïde (1) du type proportionnelle ayant un solénoïde ou enroulement de commande (3),
comportant
- un circuit pilote (8) pouvant fonctionner, lorsqu'il reçoit un signal d'activation (V), pour relier ledit enroulement (3) à une source de tension courant-continu (B) afin d'amener un courant à circuler dans cet enroulement (3),
- des moyens de capteur (11, 12) pour détecter le courant (I_{EV}) circulant dans ledit enroulement (3),
- des moyens de circuit de comparaison (13) reliés auxdits moyens de capteur (11, 12) pour comparer le courant (I_{EV}) circulant dans ledit enroulement (3) à une valeur de seuil (I_{S}), et
- des moyens de circuit de commande (6) reliés audit circuit pilote (8) et aux moyens de comparaison (13) et conçus pour provoquer l'activation de la vanne à solénoïde (1) en délivrant audit circuit pilote (8) des signaux d'activation et de désactivation successifs, les signaux d'activation (V₁, V₂) étant délivrés aussi longtemps que le courant (I_{EV}) détecté par lesdits moyens de capteurs (11) est inférieur à ladite valeur de seuil (I_{S}), les signaux de désactivation ayant une durée prédéterminée (T_{OFF}),
**caractérisé en ce que** lesdits moyens de circuit de commande (6) sont disposés pour détecter la fréquence des signaux d'activation appliqués sur le circuit pilote (8) et pour générer un premier signal lorsque ladite fréquence est supérieure à une première valeur prédéterminée et un second signal lorsque ladite fréquence est inférieure à une seconde valeur prédéterminée.

2. Circuit de commande selon la revendication 1, **caractérisé en ce que** lesdits signaux de désactivation ont une durée constante fixe (T_{OFF}).

3. Circuit de commande selon la revendication 1, **caractérisé en ce que** lesdits signaux de désactivation ont une durée variable (T_{OFF}).

4. Circuit de commande selon la revendication 3, **caractérisé en ce que** lesdits moyens de circuit de commande (6) sont conçus pour faire varier la durée (T_{OFF}) desdits signaux de désactivation en fonction du courant (I_{EV}) détecté par lesdits moyens de capteur (11).

5. Circuit de commande selon la revendication 3, **caractérisé en ce que** lesdits moyens de circuit de commande (6) sont conçus pour faire varier la durée (T_{OFF}) desdits signaux de désactivation en fonction de la tension délivrée par ladite source (B).

6. Circuit de commande selon la revendication 1, **caractérisé en ce que** lesdits moyens de circuit de commande (6) sont reliés aux moyens de capteur de courant (11) et sont conçus pour générer un premier signal d'alarme lorsque la fréquence du signal d'activation est supérieure à ladite première valeur prédéterminée et le courant détecté par lesdits moyens de capteur (11) est supérieur à une valeur prédéterminée.

7. Circuit de commande selon la revendication 1, **caractérisé en ce que** lesdits moyens de circuit de commande (6) sont conçus pour générer un second signal d'alarme lorsque la fréquence des signaux d'activation est inférieure à ladite seconde valeur prédéterminée et le courant détecté par lesdits moyens de capteur (11) est inférieur à une valeur prédéterminée.

8. Circuit de commande selon l'une quelconque des revendications précédentes, **caractérisé en ce que** lesdits moyens de circuit de commande (6) sont conçus pour délivrer au circuit pilote (8) des signaux d'activation et de désactivation avec une fréquence fixe et une largeur d'impulsion modulée (PWM ou "Modulated Pulse Width") lorsque la tension délivrée par ladite source (B) est inférieure à une valeur prédéterminée.

9. Circuit de commande selon l'une quelconque des revendications précédentes, **caractérisé en ce que** lesdits moyens de circuit de commande (6) comprennent un microprocesseur.

10. Circuit de commande selon la revendication 9, **caractérisé en ce que** lesdits moyens de capteur de courant comprennent une résistance (11) sensiblement en série avec ledit enroulement (3), et un amplificateur différentiel (12) relié aux bornes de ladite résistance (11).

11. Circuit de commande selon la revendication 10, **caractérisé en ce que** lesdits moyens de circuit de comparaison incluent un comparateur de seuil (13) avec une première entrée reliée à la sortie de l'amplificateur différentiel (12) et une seconde entrée reliée à la sortie d'un circuit générateur de signal de seuil (14).

12. Circuit de commande selon la revendication 11, **caractérisé en ce que** le microprocesseur (6) a un canal de sortie pour un signal (PWM) dont la valeur moyenne est indicative du courant souhaité dans l'enroulement (3) de la vanne à solénoïde (1), et **en ce que** ledit canal de sortie est relié à ladite seconde entrée du circuit comparateur (13) par un filtre passe-bas (14).
